# EUROPEAN PATENT APPLICATION

(11) **EP 4 696 792 A1**
(43) Date of publication of application: **18.02.2026**
(21) Application number: 24788571.8
(22) Date of filing: 27.03.2024
(51) Int. Cl.: C22B 15/00

(54) **METHOD FOR OPERATING COPPER SMELTING**

(30) Priority: 12.04.2023 JP 2023064892
(71) Applicant: JX Advanced Metals Corporation, Tokyo 105-8417 (JP)
(72) Inventor: KAWAKAMI, Akito, Oita-shi, Oita 879-2201 (JP); MOTOMURA, Tatsuya, Oita-shi, Oita 879-2201 (JP); SANO, Hiroyuki, Oita-shi, Oita 879-2201 (JP); OTA, Koki, Oita-shi, Oita 879-2201 (JP)
(74) Representative: Arnold & Siedsma
(86) International application number: PCT/JP2024/012472
(87) International publication number: WO 2024/214543

(57) **Abstract**

An operation method of copper smelting is characterized by comprising adding an S-source to a matte generated by a reaction of a smelting feed containing a copper concentrate and a raw material containing metallic Cu with a reaction gas in a reaction shaft of a flash smelting furnace, when a metallic phase of a metallic Cu is formed in the matte.

## Description

### TECHNICAL FIELD

The present invention relates to an operation method of a copper smelting.

### BACKGROUND ART

In a reaction shaft of a copper smelting flash furnace, reaction gas is fed from a concentrate burner along with smelting raw materials such as copper concentrate and flux. The copper concentrate undergoes an oxidation reaction due to the reaction gas, producing matte and slag at a bottom of the reaction shaft (see, for example, Patent Documents 1 to 3).

### PRIOR ART DOCUMENT

### PATENT DOCUMENT

PATENT DOCUMENT 1: Japanese Patent Application Publication No. 2002-363659
PATENT DOCUMENT 2: Japanese Patent Application Publication No. H11-140554
PATENT DOCUMENT 3: Japanese Patent Application Publication No. H01-036539

### SUMMARY OF THE INVENTION]

### PROBLEMS TO BE SOLVED BY THE INVENTION

In recent years, a ratio of recycled raw materials as smelting raw materials has been increasing. However, recycled raw materials may contain metallic Cu. As the amount of recycled raw materials processed increases, the ratio of metallic Cu supplied to copper smelting furnaces increases. When the amount of metallic Cu supplied to a flash smelting furnace, which is a matte smelting furnace, increases and exceeds the solubility of metallic Cu in matte, three phases of slag, matte, and metal coexist in the furnace. When metal accumulates at the bottom of a flash smelting furnace, it promotes the concentration of impurity elements in the metal phase, the penetration of low-melting-point metal into the joints of the bricks at the bottom of the furnace, and the impregnation of the bricks themselves, increasing the risk of molten metal leaking from the bottom of the furnace. In addition, if the amount of metal exceeds a certain amount and reaches the matte tap hole level, metal will suddenly be discharged from the matte hole, which may cause the metal matte launder to melt, and there is also a risk of high-impurity metal being supplied to the converter, causing operational problems.

The present invention has been made in consideration of the above problems, and aims to provide an operation method of copper smelting that can reduce the formation of metallic Cu phase.

### MEANS FOR SOLVING THE PROBLEMS

An operation method of copper smelting characterized by including a step of adding an S-source to a matte generated by a reaction of a smelting feed containing a copper concentrate and a raw material containing metallic Cu with a reaction gas in a reaction shaft of a flash smelting furnace, when a metallic phase of a metallic Cu is formed in the matte. When the metallic Cu is contained in the smelting feed in an amount exceeding its solubility in the matte, the S-source may be added to the matte. When a metal phase of the metallic Cu is observed in the matte by sampling the matte, the S-source may be added to the matte. The S-source may be added to the matte by mixing the S-source with the smelting feed. The S-source may be added to the matte by injecting the S-source together with an inert gas from an injection nozzle toward the matte. The S-source which is briquetted may be added to the matte. The S-source may be mixed with another smelting feed to form briquettes, which are then added to the matte. When the S-source is mixed with the another smelting feed to form briquettes, the specific gravity of the briquettes may be adjusted. The S-source may be mixed with a recycled raw material or another smelting feed to form briquettes, thereby increasing the throughput of the recycled material. A specific surface area of the S-source may be 20 mm²/g or more. The S-source may be supplied to the matte in an amount sufficient to completely turn the metallic Cu into a matte. When a total amount of S contained in the S-source is 100 mass%, and it is assumed that 90 mass% of S contributes to matte formation of the metallic Cu, the S-source may be supplied to the matte in an amount sufficient to turn the entire amount of the metallic Cu into matte. The S-source may include elemental sulfur or a sulfide. The S-source may contain Fe. The S-source containing Fe may be chalcopyrite, pyrite, or pyrrhotite.

### EFFECTS OF THE INVENTION

According to the present invention, it is possible to provide an operation method of copper smelting capable of reducing the formation of metallic Cu phase.

### BRIEF DESCRIPTION OF THE DRAWINGS

FIG. 1 is a diagram of a schematic configuration of a flash furnace for copper smelting according to an embodiment;
FIG. 2 is a diagram of details of a concentrate burner;
FIG. 3 is a phase diagram of solubility of Cu in matte;
FIG. 4 is a diagram of an injection nozzle;
FIG. 5 is a diagram of an experimental apparatus;
FIG. 6(a) is a photograph of results of Comparative Example; and
FIG. 6(b) is a photograph of results of Example 1.

### MODES FOR CARRYING OUT THE INVENTION

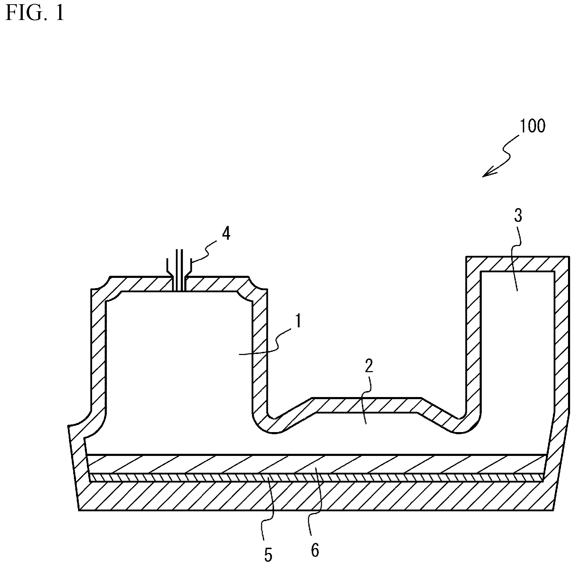

(Embodiment) FIG. 1 is a diagram of a schematic configuration of a flash smelting furnace 100 for copper smelting according to an embodiment. As illustrated in FIG. 1, the flash smelting furnace 100 includes a reaction shaft 1 in which concentrate and reaction gas are mixed, a settler 2, and an uptake 3. A concentrate burner 4 is provided on the ceiling of the reaction shaft 1. The concentrate burner 4 supplies copper concentrate, flux, recycled raw materials, or the like (hereinafter, these solid raw materials are referred to as smelting raw materials), as well as a main reaction blast gas, an auxiliary reaction gas, and a dispersion gas (which also contributes to the reaction) into the reaction shaft 1. For example, the main reaction blast gas and the auxiliary reaction gas are oxygen-enriched air, and the dispersion gas is air or oxygen-enriched air.

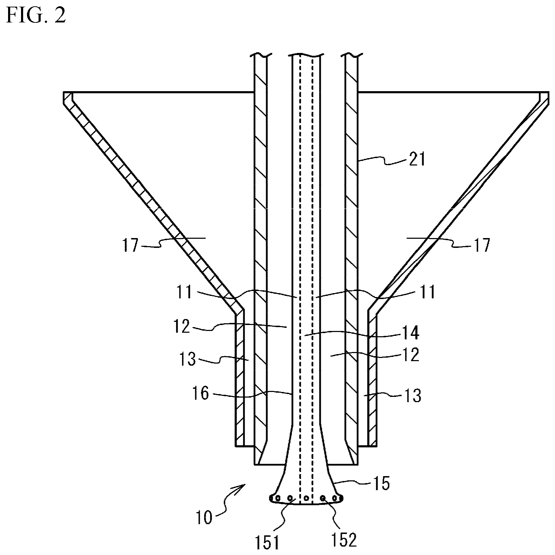

FIG. 2 is an explanatory diagram of the details of the concentrate burner 4, and illustrates an input section 10 through which the smelting raw material, the main reaction blast gas, the auxiliary reaction gas, and the dispersion gas are input to the reaction shaft 1.

The input section 10 of the concentrate burner 4 is provided with a lance 16, and within the lance 16, a first passage 11 through which the dispersion gas passes and a fourth passage 14 through which the auxiliary reaction gas passes are formed. The fourth passage 14 is provided in the center of the lance 16, and the first passage 11 is provided around the fourth passage 14. The input section 10 also has a second passage 12 as a raw material flow path provided on the outside of the lance 16, more specifically on the outer periphery of the lance 16. The input section 10 further has a third passage 13 provided on the outside of the second passage 12, more specifically on the outer periphery of the second passage 12, through which the main reaction blast gas passes. The third passage 13 is formed by a tubular portion provided to surround the second passage 12, and is connected to a funnel-shaped air chamber 17 provided above it. The second passage 12 and the third passage 13 are separated by a cylindrical partition wall 21.

The first passage 11 supplies the dispersion gas into the reaction shaft 1. The second passage 12 supplies the concentrate into the reaction shaft 1. The third passage 13 supplies the main reaction gas from the air chamber 17 into the reaction shaft 1. The fourth passage 14 supplies the auxiliary reaction gas into the reaction shaft 1.

A hollow truncated cone-shaped dispersion cone 15 is formed at the tip (lower end) of the lance 16. A plurality of supply holes 152 are formed in a lower side 151 of the dispersion cone 15 to discharge the dispersion gas that has passed through the first passage 11 into the reaction shaft 1. The supply hole 152 is provided so that the gas input direction is normal to the bottom circle of the dispersion cone 15.

When the smelting raw material is fed into the reaction shaft 1 from the concentrate burner 4, the copper concentrate containing sulfides undergoes an oxidation reaction according to the following reaction formula (1) and separates into matte 5 and slag 6 at the bottom of the reaction shaft 1 as illustrated in FIG. 1. In the following reaction formula (1), Cu₂S•FeS corresponds to the main component of the matte 5, and FeO•SiO₂ corresponds to the main component of the slag 6. Silica ore is used as the flux.

CuFeS₂ + SiO₂ + O₂ → Cu₂S•FeS + FeO•SiO₂ + SO₂ + Reaction heat (1)

The recycled raw material may contain metallic Cu. If the amount of metallic Cu is small, the metallic Cu is sulfurized during the process of falling from the concentrate burner 4 to become the matte 5. Therefore, no metal phase is generated.

However, as the amount of recycled raw materials processed increases, the proportion of metallic Cu in the smelting raw materials tends to increase. In recent years, the proportion of metallic Cu in the Cu component of the smelting raw materials may be 6.0 mass% or more and 28.0 mass% or less, or 9.0 mass% or more and 18.0 mass% or less, or 9.0 mass% or more and 12.0 mass% or less.

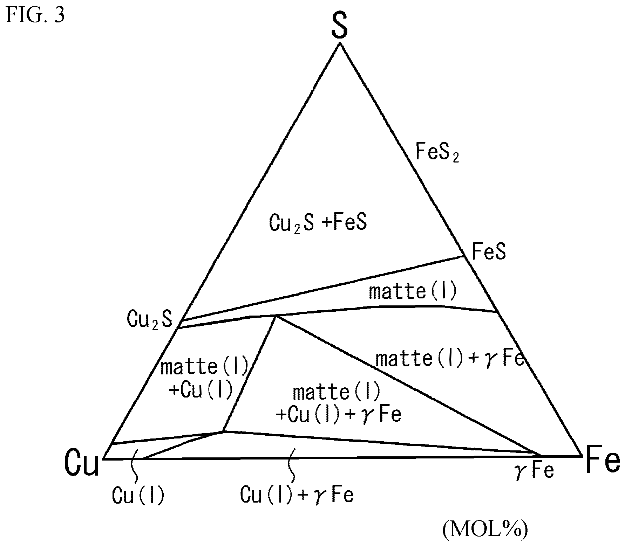

When the proportion of metallic Cu in the smelting raw materials increases, metallic Cu is not completely sulfurized during the process of falling from the concentrate burner 4, and falls as metallic Cu. In the matte 5, metallic Cu dissolves to a certain extent, but there is a solubility limit. FIG. 3 is a phase diagram of the solubility of Cu in matte at 1250 °C. In FIG. 3, "matte(l)" indicates the range in which metallic Cu can dissolve in the matte. "matte(l)+Cu(l)" indicates the range where metallic Cu cannot dissolve in the matte and a metal phase is generated. The phase diagram in FIG. 3 is based on "Joewal Koh, Yazawa Akira, 1983, Senken Iho."

In this embodiment, when the amount of metallic Cu supplied to the flash smelting furnace 100 exceeds its solubility in the matte 5, a raw material containing Fe and S (hereinafter referred to as "S source") is supplied as a matte source for metallic Cu. For example, based on the phase diagram in FIG. 3, an S-source is supplied in an amount equal to or greater than the amount of metallic Cu that will cause the entire amount of metallic Cu to become matte. This causes metallic Cu to become a sulfide containing Fe and S, which will become matte and dissolve in the matte 5. As a result, the generation of metallic Cu phase at the bottom of the flash smelting furnace 100 can be suppressed.

Whether the supply amount of metallic Cu exceeds the solubility in the matte 5 can be determined by sampling the smelting raw material and analyzing the composition. Alternatively, if a metal phase is observed by sampling the matte 5 of the reaction shaft 1, it can be determined that the supply amount of metallic Cu exceeds the solubility in the matte 5.

As the S-source, FeS mineral (pyrrhotite), FeS₂ mineral (pyrite), CuFeS₂ mineral (chalcopyrite), minerals containing FeS•FeS₂, copper concentrate containing S or the like can be used. When comparing FeS mineral and FeS₂ mineral, it is preferable to use FeS₂ mineral, which contains more sulfur necessary for matte formation. Alternatively, as the S-source, S-containing tailings generated in the ore-processing process of non-ferrous metal raw materials can be used. For example, tailings generated in the flotation process are an example of S-containing tailings.

If the total S contained in the S-source is 100 mass%, there is a risk that the 100 mass% S will not contribute to the matte formation of metallic Cu. Therefore, it is preferable to feed an excess amount of S-source into the furnace. For example, if it is assumed that 90 mass% of S contributes to the matte formation of metallic Cu when the total S contained in the S-source is 100 mass%, it is preferable to supply an S-source in an amount greater than or equal to the amount of matte formation of the entire metallic Cu based on the phase diagram in FIG. 3. If it is assumed that 80 mass% of S contributes to the matte formation of metallic Cu when the total S contained in the S-source is 100 mass%, it is preferable to supply an S-source in an amount greater than or equal to the amount of matte formation of the entire metallic Cu based on the phase diagram in FIG. 3. If the total S contained in the S-source is 100 mass%, and it is assumed that 70 mass% of S contributes to matte formation of metallic Cu, it is preferable to supply an S-source in an amount greater than or equal to the amount that will cause the entire amount of metallic Cu to be matte, based on the phase diagram in FIG. 3.

If a powdered raw material with a large specific surface area is used as the S-source, the S-source may be oxidized before reacting with metallic Cu due to the oxidizing power of the reaction gas in the reaction shaft 1. Therefore, it is preferable to use a lump-shaped S-source. If the S-source has a lump shape with a small specific surface area, oxidation loss during the time it passes through the reaction shaft 1 can be suppressed, and it will land in the molten material drop area directly below the reaction shaft 1 and come into contact with and react with the matte 5 and the metallic Cu. As the S-source having a lump shape, a pelletized powdered raw material containing S, a natural mineral, or a melt-formed material can be used.

On the other hand, if the specific surface area is too small, there is a risk that the unreacted S-source will remain in the matte 5 and be discharged from the flash smelting furnace. Since it is unreacted, it cannot contribute to matte formation, and as a result, there is a risk that a metal phase will be formed on the floor of the settler 2. Therefore, specifically, the specific surface area of the S-source is preferably 20 mm²/g or more.

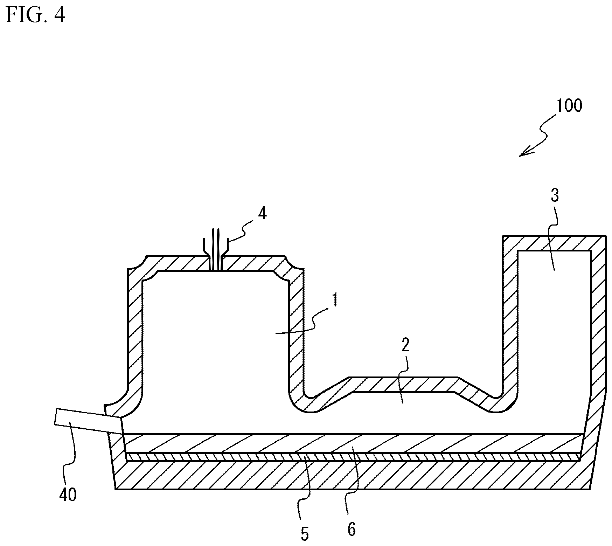

The S-source may be added by mixing it with the smelting raw material. Alternatively, the S-source may be injected into the reaction shaft 1 using an inert gas as a carrier. By using the inert gas, the S-source can be brought into contact with the matte 5 and the metallic Cu while suppressing oxidation of the S-source. For example, as illustrated in FIG. 4, an injection nozzle 40 can be provided in the reaction shaft 1, and the S-source can be injected into the reaction shaft 1 from the injection nozzle 40. Alternatively, briquetted S-source or lump-shaped S-source may be added toward the settler bath directly below the reaction shaft 1. For example, the molten droplets mainly composed of slag and matte generated in the reaction shaft 1 fall on the surface of the settling bath like a shower from above, and when the briquetted S-source or the lump-shaped S-source is supplied to the surface of the bath where the molten droplets fall, the S-source comes into contact with the matte 5 and S is supplied to the matte 5. In order to avoid the oxidation of the S-source in the gas zone as much as possible, it is effective to make the briquettes small in specific surface area. In addition, instead of briquetting only the S-source, adjusting the specific gravity by mixing and briquetting with other smelting raw materials can supply sulfur more efficiently into the matte 5. For example, by mixing the S-source with a powdered recycled raw material mainly composed of Cu, it is possible to form a briquette with a specific gravity larger than that of the slag, which can be easily reached to the matte 5. For example, when only copper concentrate is briquetted as the S-source, the specific gravity of the briquettes varies depending on the compacting pressure conditions and is 1.4 to 3.8 g/cm³. However, by mixing the copper concentrate with Cu-based recycled raw materials in a weight ratio of 5:3 to form briquettes, the specific gravity increases to 2.1 to 4.8 g/cm³. The mixed recycled raw materials are not only used to increase the specific gravity of the briquettes, but also form matte within the matte phase, making it a method for efficiently increasing the amount of recycled raw materials processed in the flash smelting furnace. The briquetted raw materials may be fed into the furnace through a concentrate burner or from the ceiling of the settler 2, but it is preferable to feed into the area directly below the reaction shaft 1 where the generated droplets fall in a shower-like manner. In addition, in order to increase the stability of the briquetted raw materials, a binder may be added or the moisture content may be adjusted, and the particle size distribution and ratio of the S-source and recycled raw materials may be adjusted. As the binder, fine powder raw materials processed in the flash smelting furnace and by-products such as powders or liquids generated in each process of the smelter may be used. Furthermore, in order to increase the stability of the briquetted raw material, a process such as high-temperature treatment in an inert atmosphere or sintering may be included.

### [Examples]

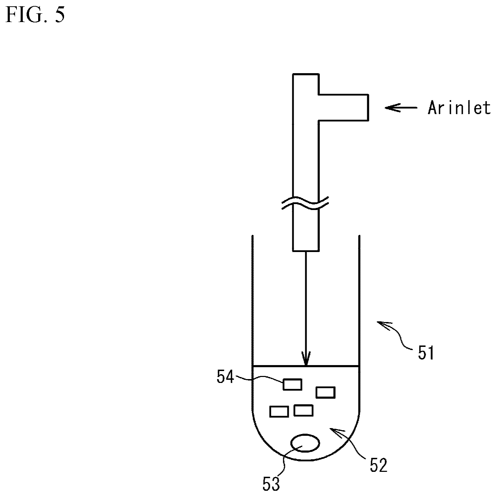

(Example 1) As illustrated in FIG. 5, matte 52 was filled in a quartz Tammann crucible 51 in advance, and the quartz Tammann crucible 51 was fixed into an alumina crucible. Next, the alumina crucible was set in an electric furnace, and the temperature of molten matte was increased to 1250 °C. Next, metallic Cu 53 was added to the molten matte 52 in an amount that exceeded the solubility on the phase diagram, and the mixture was held for 2 minutes. As the metallic Cu 53, spherical Cu with a diameter of 5 mm (100% purity) was used. At this time, the composition of the melt in the quartz Tammann crucible 51 was such that two-liquid phases, matte and Cu, coexisted.

Next, in order to form matte from the Cu co-existing in the melt, a FeS₂ reagent 54, which had been pressurized to have a specific surface area of about 300 to 500 mm²/g, was added as a S-source to the quartz Tammann crucible 51 under argon gas atmosphere and held for 10 minutes. The FeS₂ concentration in the FeS₂ reagent 54 used was 87.9 mass%. Next, in order to prevent Cu precipitation during the cooling process, the alumina crucible with the quartz Tammann crucible 51 was removed from the electric furnace and quenched in ice water.

(Comparative Example) In Comparative Example, no S-source was added. The other conditions were the same as in Example 1.

(Analysis) The presence or absence of a residual Cu phase (metallic Cu) in the quenched samples was observed for Example 1 and Comparative Example. The residual Cu phase was evaluated by CT scanning and microscopic observation of the sample cross section. The cross section of the sample was observed by polishing the cylindrical sample with a diameter of 17.0 mm in 0.5 mm increments, and the observation was repeated to confirm the presence or absence of a Cu phase. The evaluation accuracy was improved by using CT in combination.

The compositions of the matte 52, the metallic Cu 53, and the FeS₂ reagent 54 used in the test are shown in Table 1. Table 2 shows the matte grade (copper content in matte) of the matte 52 filled in the quartz Tammann crucible 51, the amount of the matte 52 filled in the quartz Tammann crucible 51, the amount of the metallic Cu 53 added to the quartz Tammann crucible 51, the amount of the FeS₂ reagent 54 added to the quartz Tammann crucible 51, and the average composition of each component in the quenched sample.

**[Table 1]**

| | Cu (mass%) | Fe (mass%) | S (mass%) |
|---|---|---|---|
| MATTE | 61.2 | 12.7 | 21.8 |
| METALLIC Cu | 100 | 0 | 0 |
| FeS₂ REAGENT | 0.1 | 45.1 | 42.8 |

**[Table 2]**

| | COMPARATIVE EXAMPLE | | | EXAMPLE 1 | | |
|---|---|---|---|---|---|---|
| MATTE GRADE (mass%) | 61.2 | | | 61.2 | | |
| MATTE AMOUNT (g) | 8 | | | 8 | | |
| Cu AMOUNT (g) | 0.59 | | | 0.59 | | |
| FeS₂ AMOUNT (g) | 0 | | | 1.75 | | |
| AVERAGE COMPOSITION (mass%) | Cu | Fe | S | Cu | Fe | S |
| | 63.9 | 11.8 | 20.3 | 53.1 | 17.5 | 24.1 |

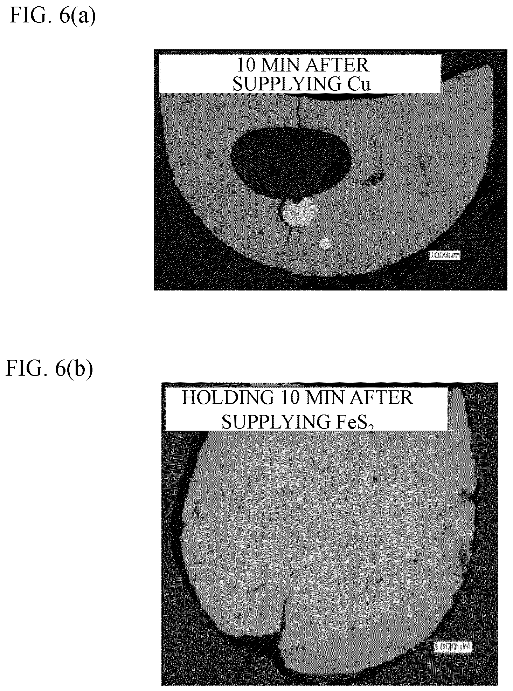

FIG. 6(a) is a photograph of the results of Comparative Example. FIG. 6(b) is a photograph of the results of Example 1. As illustrated in FIG. 6(a), a Cu phase was observed in the sample of Comparative Example, but as illustrated in FIG. 6(b), a Cu phase was not observed in the sample of Example 1. In FIG. 6(a), the small circle below the black circle is the Cu phase. In FIG. 6(b), it shows that the Cu phase dissolved into the matte. From this result, it was confirmed that even if metallic Cu exists in an amount exceeding the solubility on the phase diagram, the metallic Cu can be dissolved into the matte by adding a S-source.

The solubility of the metallic Cu in the matte phase was investigated using the sample of Comparative Example. It was confirmed that the measured solubility generally corresponds to the phase diagram.

(Examples 2 and 3) Next, the contribution of the FeS₂ reagent 54 was examined. Example 2 is an example in which the FeS₂ reagent 54 was supplied in an amount more than the amount of the FeS₂ reagent 54 that would cause the entire amount of the metallic Cu to become matte, assuming that 70 mass% of S contributes to the matte formation of the metallic Cu when the total S contained in the FeS₂ reagent 54 is 100 mass%. Example 3 is an example in which the FeS₂ reagent 54 was supplied in an amount more than the amount of the FeS₂ reagent 54 that would cause the entire amount of the metallic Cu to become matte, assuming that 90 mass% of S contributes to the matte formation of the metallic Cu when the total S contained in the FeS₂ reagent 54 is 100 mass%.

Table 3 shows the matte grade (copper content in matte) of the matte 52 filled in the quartz Tammann crucible 51, the amount of the matte 52 filled in the quartz Tammann crucible 51, the amount of the metallic Cu 53 added to the quartz Tammann crucible 51, the amount of the FeS₂ reagent 54 added to the quartz Tammann crucible 51, and the average composition of the quenched sample.

**[Table 3]**

| | EXAMPLE 2 | | | EXAMPLE 3 | | |
|---|---|---|---|---|---|---|
| MATTE GRADE (mass%) | 61.2 | | | 61.2 | | |
| MATTE AMOUNT (g) | 8 | | | 8 | | |
| Cu AMOUNT (g) | 0.59 | | | 0.59 | | |
| FeS₂ AMOUNT (g) | 0.38 | | | 0.24 | | |
| AVERAGE COMPOSITION (mass%) | Cu | Fe | S | Cu | Fe | S |
| | 61.2 | 13.2 | 21.2 | 62.1 | 12.7 | 20.9 |

In Example 3, the amount of Cu phase was smaller than in Comparative Example. From this result, it was confirmed that, assuming that 90 mass% of S contributes to the matte formation of the metallic Cu when the total S contained in the FeS₂ reagent 54 is 100 mass%, the generation of metallic Cu is suppressed by adding FeS₂ in an amount greater than or equal to the amount that promotes matte formation of the entire metallic Cu phase. In Example 2, no Cu phase was observed. From these results, it was concluded that, assuming that the total S contained in the FeS₂ reagent 54 is 100 mass%, and that 70 mass% of S contributes to matte formation of the metallic Cu, it is preferable to supply an amount of the FeS₂ reagent 54 that is greater than or equal to the amount that promotes matte formation of the entire amount of metallic Cu.

Although the embodiments of the present invention have been described in detail, it is to be understood that the various change, substitutions, and alterations could be made hereto without departing from the scope of this invention.

## Claims

1. An operation method of copper smelting **characterized by** comprising:
adding an S-source to a matte generated by a reaction of a smelting feed containing a copper concentrate and a raw material containing metallic Cu with a reaction gas in a reaction shaft of a flash smelting furnace, when a metallic phase of a metallic Cu is formed in the matte.

2. The operation method of copper smelting as claimed in claim 1,
**characterized in that** when the metallic Cu is contained in the smelting feed in an amount exceeding its solubility in the matte, the S-source is added to the matte.

3. The operation method of copper smelting as claimed in claim 1,
**characterized in that** when a metal phase of the metallic Cu is observed in the matte by sampling the matte, the S-source is added to the matte.

4. The operation method of copper smelting as claimed in claim 1,
**characterized in that** the S-source is added to the matte by mixing the S-source with the smelting feed.

5. The operation method as claimed in claim 1,
**characterized in that** the S-source is added to the matte by injecting the S-source together with an inert gas from an injection nozzle toward the matte.

6. The operation method of copper smelting as claimed in claim 1, **characterized in that** the S-source which is briquetted is added to the matte.

7. The operation method as claimed in claim 1,
**characterized in that** the S-source is mixed with another smelting feed to form briquettes, which are then added to the matte.

8. The operation method of copper smelting as claimed in claim 7,
**characterized in that** when the S-source is mixed with the another smelting feed to form briquettes, the specific gravity of the briquettes is adjusted.

9. The operation method as claimed in claim 1,
**characterized in that** the S-source is mixed with a recycled raw material or another smelting feed to form briquettes, thereby increasing the throughput of the recycled material.

10. The operation method as claimed in claim 1,
**characterized in that** a specific surface area of the S-source is 20 mm²/g or more.

11. The operation method as claimed in claim 1,
**characterized in that** the S-source is supplied to the matte in an amount sufficient to completely turn the metallic Cu into a matte.

12. The operation method as claimed in claim 1,
**characterized in that** when a total amount of S contained in the S-source is 100 mass%, and it is assumed that 90 mass% of S contributes to matte formation of the metallic Cu, the S-source is supplied to the matte in an amount sufficient to turn the entire amount of the metallic Cu into matte.

13. The operation method as claimed in claim 1,
**characterized in that** the S-source includes elemental sulfur or a sulfide.

14. The operation method as claimed in claim 1,
**characterized in that** the S-source contains Fe.

15. The operation method as claimed in claim 14,
**characterized in that** the S-source containing Fe is chalcopyrite, pyrite, or pyrrhotite.
